# FASCICULE DE BREVET EUROPEEN

(11) **EP 2 382 163 B1**
(45) Date de publication et mention de la délivrance du brevet: **29.05.2013**
(21) Numéro de dépôt: 10700999.5
(22) Date de dépôt: 18.01.2010
(51) Int. Cl.: C02F 9/00, C02F 1/56, C02F 1/28

(54) **PROCEDE DE TRAITEMENT D'EAU PAR FLOCULATION LESTEE ET DECANTATION INCLUANT UNE MISE EN CONTACT PREALABLE DE L'EAU AVEC UN ADSORBANT**
VERFAHREN ZUR BEHANDLUNG VON WASSER DURCH BALLASTIERTE AUSFLOCKUNG UND ABSETZUNG MIT VORKONTAKTIERUNG DES WASSERS MIT EINEM ADSORPTIONSMITTEL
METHOD FOR TREATING WATER BY BALLASTED FLOCCULATION AND SETTLEMENT, INCLUDING PRE-CONTACTING THE WATER WITH AN ADSORBENT

(30) Priorité: 29.01.2009 US 362156
(43) Date de publication de la demande: 02.11.2011
(73) Titulaire: Veolia Water Solutions & Technologies Support, 94417 Saint-Maurice Cedex (FR)
(72) Inventeur: SAUVIGNET, Philippe, F-35460 Saint-Etienne-en-Cogles (FR); GAID, Abdelkader, F-75014 Paris (FR)
(74) Mandataire: Larcher, Dominique
(86) Numéro de dépôt international: PCT/EP2010/050533
(87) Numéro de publication internationale: WO 2010/086249

(56) Documents cités:
- FR-A1- 2 910 822

## Description

### 1. Domaine de l'invention

Le domaine de l'invention est celui du traitement de l'eau en vue de sa potabilisation. Il concerne également le traitement d'eaux industrielles contenant des matières adsorbables et le traitement tertiaire d'eaux usées en vue de leur épuration et notamment en vue d'en abattre la concentration en agents ayant un effet perturbateur endocrinien.

Plus précisément, l'invention concerne le traitement physico-chimique de l'eau incluant notamment une séparation solide-liquide par floculation lestée et une décantation.

### 2. Art antérieur

Le traitement physico-chimique des eaux, qu'il soit mis en oeuvre dans le but de potabiliser des eaux de surface, des eaux karstiques..., ou d'épurer des eaux usées urbaines ou industrielles, est obtenu par la mise en oeuvre de procédés qui incluent une succession d'étapes.

Ce type de traitement inclut en général une étape de coagulation. La coagulation engendre une agglomération des particules colloïdales en suspension dans l'eau. Ceci est le plus souvent obtenu en introduisant l'eau à traiter dans une zone de coagulation dans laquelle un réactif coagulant, pouvant par exemple être constitué par un sel de métal trivalent, est injecté.

L'eau ainsi coagulée subit ensuite une étape de floculation. La floculation engendre la formation de flocs par agglomération des particules colloïdales préalablement coagulées. Ceci est le plus souvent obtenu en introduisant l'eau coagulée dans une zone de floculation dans laquelle un réactif floculant constitué usuellement d'un polymère organique est injecté dans l'eau coagulée.

Finalement, l'eau coagulée puis floculée subit une étape de décantation afin de séparer ces flocs de l'eau. La décantation est obtenue en faisant transiter l'eau à l'intérieur d'un décanteur en sousverse duquel les boues formées sont extraites alors que l'eau traitée est extraite en surverse. L'eau traitée peut ensuite être acheminée vers un dispositif de filtration placé en aval de l'installation nécessaire à la mise en oeuvre de la coagulation, de la floculation et de la décantation afin de subir un traitement ultérieur de polissage.

Afin d'améliorer la vitesse de formation des flocs et leur vitesse de décantation, la technologie dite de floculation lestée a été développée. Une telle technique est notamment décrite dans les demandes internationales de brevet portant les numéros WO-A1-03/053862 et WO-A1-2008/083923 déposée au nom de la Demanderesse.

La floculation lestée consiste à mettre en oeuvre un lest ou ballast généralement constitué d'un matériau granulaire fin de forte densité qui est injecté directement dans la zone de floculation ou en amont de celle-ci. L'injection de ballast conduit à la formation relativement rapide de flocs lestés dont la vitesse de décantation est augmentée par rapport à celle d'un floc classique.

Le traitement par floculation lestée, qui a essentiellement pour objet d'abattre la teneur en particules en suspension dans l'eau, peut être associé à un traitement d'adsorption dont la mise en oeuvre conduit principalement à réduire la teneur en pollution dissoute dans l'eau.

Le traitement de l'eau par adsorption est le plus souvent obtenu en injectant dans l'eau au moins un réactif ayant des propriétés adsorbantes tel que du charbon actif.

Il est connu de pratiquer des injections de réactif adsorbant soit directement dans la zone de floculation et/ou de coagulation, soit dans une zone de contact qui est séparée des zones de coagulation et de floculation, tel que cela est par exemple précisé dans la demande de brevet français portant le numéro FR-A1-2 868 064 déposée au nom de la Demanderesse.

La mise en oeuvre de ces techniques est particulièrement intéressante dans la mesure où elles conduisent à abattre de manière significative la teneur de l'eau en impuretés colloïdales, dissoutes ou en suspension.

Ces techniques présentent toutefois quelques inconvénients.

### 3. Inconvénients de l'art antérieur

Notamment, un traitement par adsorption ne peut être efficace que s'il est maîtrisé.

Toutefois, le défaut de maîtrise de la consommation en réactifs adsorbants constitue un problème majeur inhérent à la mise en oeuvre de ces techniques de traitement d'eau.

Ce problème se manifeste essentiellement sous deux formes : soit l'apport en réactif adsorbant est insuffisant, soit il est surabondant.

Un apport insuffisant en réactif adsorbant conduit à limiter l'abattement par adsorption des impuretés contenues dans l'eau et donc à produire une eau traitée ne répondant pas aux critères de potabilisation.

Un apport surabondant en réactif adsorbant, bien qu'il permette de réduire de façon importante la quantité d'impuretés contenues dans l'eau, engendre néanmoins la production d'une eau de qualité moyenne en raison de la forte présence de particules dans l'eau. En effet, lorsque le réactif adsorbant est apporté dans des proportions trop importantes, il n'est pas rare qu'une portion de celui-ci se retrouve dans l'eau après qu'elle a été traitée.

Au-delà du fait que la mauvaise maîtrise des apports en réactif adsorbant engendre des difficultés relatives à la qualité de l'eau produite, elle engendre en outre des difficultés d'ordre économique.

Un apport trop faible en réactif adsorbant conduit à la production d'une eau de qualité moyenne dont l'amélioration du niveau de qualité suppose la mise en oeuvre de traitements complémentaires engendrant des dépenses supplémentaires.

Un apport excessif en réactif adsorbant constitue une surconsommation qui engendre en elle-même des dépenses supplémentaires.

En outre, compte tenu que la qualité de l'eau produite lors d'un apport excessif en réactif adsorbant est relativement médiocre, il est également nécessaire de mettre en oeuvre des traitements complémentaires qui ont un impact négatif sur le coût global du traitement de l'eau.

Au final, une mauvaise maîtrise des apports en réactif adsorbant conduit le plus souvent à produire une eau de qualité moyenne et/ou à augmenter le coût du traitement de l'eau.

### 4. Objectifs de l'invention

L'invention a donc notamment pour objectif de pallier ces inconvénients de l'art antérieur.

Plus précisément, un objectif de l'invention est de fournir, dans au moins un mode de réalisation de l'invention, une technique de traitement d'eau, comprenant notamment une floculation lestée et un traitement par adsorption, qui conduise à produire une eau de belle qualité, à tout le moins comparativement aux techniques de l'art antérieur.

Un autre objectif de l'invention est, dans au moins un mode de réalisation de l'invention, de mettre en oeuvre une telle technique de traitement d'eau qui conduise à réduire les coûts de production de l'eau traitée.

L'invention a encore pour objectif de produire, dans au moins un mode de réalisation de l'invention, une telle technique de traitement d'eau qui soit particulièrement économique, ou qui soit à tout le moins plus économique que les techniques de l'art antérieur.

Un objectif de l'invention est également de fournir, dans au moins un mode de réalisation de l'invention, une telle technique de traitement d'eau qui soit robuste, efficace et facile à mettre en oeuvre.

### 5. Exposé de l'invention

Ces objectifs, ainsi que d'autres qui apparaîtront par la suite, sont atteints à l'aide d'un procédé de traitement d'une eau brute chargée d'impuretés colloïdales, dissoutes ou en suspension au sein d'une installation de traitement, ledit procédé comprenant au moins les étapes suivantes :
- mettre en contact dans une zone agitée de pré-contact ladite eau avec au moins un agent adsorbant en poudre ;
- introduire le premier mélange provenant de ladite zone de pré-contact dans une zone agitée de floculation lestée ;
- mettre en contact dans ladite zone agitée de floculation lestée ledit premier mélange avec au moins un réactif floculant et avec au moins un ballast constitué d'au moins un matériau granulaire insoluble plus lourd que l'eau pour permettre la formation de flocs lestés ;
- introduire le second mélange provenant de ladite zone de floculation lestée dans une zone de décantation ;
- extraire un mélange de boues, de ballast et d'agent adsorbant en poudre en partie basse de ladite zone de décantation ;
- extraire l'eau traitée séparée dudit mélange de boues, de ballast et d'agent adsorbant en poudre en partie haute de ladite zone de décantation ;
- introduire ledit mélange de boues, de ballast et d'agent adsorbant en poudre dans un hydrocyclone ;
- recycler les souverses dudit hydrocyclone constituées essentiellement de ballast dans ladite zone de floculation lestée ;
- acheminer les surverses dudit hydrocyclone constituée par un mélange de boue et de réactif adsorbant en poudre dans une zone de transition.

Selon l'invention, un tel procédé comprend de plus :
- une étape de recyclage dans ladite zone de pré-contact d'au moins une partie du mélange de boues et d'agent adsorbant en poudre provenant de ladite zone de transition ;
- une étape de mesure en continu d'au moins une information représentative de la concentration en agent adsorbant en poudre dans ladite zone de pré-contact ;
- une étape d'injection en amont de ladite zone de pré-contact d'une suspension d'agent adsorbant en poudre neuf en milieux aqueux lorsque ladite concentration en agent adsorbant en poudre dans ladite zone de pré-contact est inférieure à une valeur seuil prédéterminée
- une étape d'acidification de ladite suspension d'agent adsorbant.

Ainsi, l'invention repose sur une approche tout à fait nouvelle et inventive qui consiste à maîtriser le traitement de l'eau par adsorption :
- en recyclant un mélange de boues et de réactif adsorbant provenant de la surverse d'un hydrocyclone relié à la souverse d'une zone de décantation dans une zone de pré-contact dans laquelle une eau a traitée est mise en contact avec un tel réactif, et
- en mesurant une information représentative de la concentration en réactif adsorbant en poudre dans une zone de pré-contact dans laquelle l'eau est mise en contact avec un tel réactif, puis
- en injectant en amont de ladite zone de contact une certaine quantité de réactif adsorbant en poudre neuf en suspension dans un milieux aqueux lorsque cela est nécessaire pour maintenir dans la zone de pré-contact une concentration en réactif adsorbant prédéterminée de façon à produire une eau de qualité convenable.

La mise en oeuvre d'une telle technique permet donc de recycler une partie du réactif adsorbant déjà utilisé et d'injecter dans l'eau à traiter une quantité juste nécessaire d'une suspension en milieux aqueux de réactif adsorbant neuf de manière à produire une eau de qualité tout en limitant la consommation en réactif adsorbant et en limitant le nombre d'opération de traitement nécessaire à la production de l'eau.

La mise en oeuvre de la technique selon l'invention conduit donc à produire une eau de qualité au moins équivalente mais à un coût plus faible que les techniques de l'art antérieur.

Selon un aspect essentiel de l'invention, ce procédé inclut une étape d'acidification de ladite suspension d'agent adsorbant.

La mise en oeuvre d'une telle étape permet de réduire la taille des particules d'agent adsorbant et, à concentration égale, d'augmenter sa surface spécifique globale en contact avec l'eau à traiter. Ceci conduit à améliorer les capacités d'adsorption d'un procédé selon l'invention.

Inversement, à performances égales, la mise en oeuvre de cette acidification permet de réduire encore davantage la consommation en agent adsorbant. Ceci conduit à ce que la quantité d'agent adsorbant résiduel dans l'eau traitée soit plus faible, ce qui a un impact positif sur les traitements mis en oeuvre en aval du procédé selon l'invention.

La concentration en réactif adsorbant en poudre de la suspension est avantageusement comprise entre 5 et 50 mg/l et préférentiellement entre 5 et 15 mg/l. Cette concentration varie notamment en fonction des objectifs du traitement, de la qualité du réactif adsorbant utilisé, et du pH de l'eau à traiter.

Selon une caractéristique avantageuse, ladite étape de mesure en continu d'au moins une information représentative de la concentration en agent adsorbant en poudre dans ladite zone de pré-contact comprend les sous-étapes consistant à :
- mesurer l'absorbance aux UV de ladite eau brute ;
- mesurer l'absorbance aux UV de ladite eau traitée ;
- déduire des mesures de l'absorbance la concentration en agent adsorbant en poudre.

La mise en oeuvre de ces sous-étapes permet en effet d'obtenir de manière simple, efficace et précise une information représentative de la concentration en agent adsorbant présent dans la zone de pré-contact. Ceci permet de réajuster de manière satisfaisante cette concentration par un apport approprié en agent adsorbant neuf et de limiter en conséquence au plus juste la consommation en cet (ou ces) agent(s).

Selon une caractéristique avantageuse, ledit agent adsorbant en poudre est constitué par du charbon actif en poudre.

Dans ce cas, la valeur de concentration seuil dudit charbon actif en poudre dans ladite zone de pré-contact est préférentiellement comprise entre 0,5 et 10 g/l.

Une concentration en agent adsorbant dans la zone de pré-contact qui serait inférieure à 0,5g/l ne permettrait pas de traiter de manière satisfaisante l'eau dans la mesure où la capacité d'adsorption du procédé selon l'invention serait insuffisante. Toutefois, il a été constaté que si cette concentration est maintenue supérieure à 3g/l, la capacité d'adsorption de l'agent adsorbant augmente, mais de manière significative.

Lorsque la concentration en agent adsorbant en poudre dans la zone de pré-contact est supérieure à 5g/l, l'eau traitée émanant du procédé contient une certaine proportion de cet (ou ces) agent(s) en sorte que cela a un impact négatif sur les traitements placés en aval. En particulier, lorsque ces traitements impliquent la mise en oeuvre directe de membranes de filtration, une concentration trop élevée en agent adsorbant peut conduire au colmatage des membranes et donc à la réduction de leur temps de filtration.

Afin d'obvier cet inconvénient, il peut être prévu d'augmenter la concentration en agent floculant (par exemple du polymère) dans la zone de floculation. Ceci conduit toutefois à augmenter le coût du traitement de l'eau.

Avantageusement, ladite valeur seuil de concentration seuil dudit charbon actif en poudre dans ladite zone de pré-contact varie entre 1 et 3 g/l.

Une telle concentration en agent adsorbant dans la zone de pré-contact permet tant de maintenir un bon niveau d'adsorption que de limiter la proportion d'agent adsorbant résiduel dans l'eau traitée et donc de limiter la survenue d'impact négatif sur les traitements avals.

Avantageusement, ledit charbon actif en poudre présente une granulométrie comprise entre 8 et 60 micromètres.

Selon une caractéristique préférentielle, ledit charbon actif en poudre présente une granulométrie comprise entre 15 et 35 micromètres.

Une telle granulométrie, correspondant à celle d'un charbon actif en poudre classique, associée à une valeur de concentration en agent adsorbant dans la zone de pré-contact comprise entre 0,5 et 5 g/l permet la génération d'une surface spécifique globale conférant au procédé une bonne capacité d'adsorption.

Selon une autre caractéristique préférentielle, ledit charbon actif en poudre présente une granulométrie comprise entre 8 et 15 micromètres.Une telle granulométrie, qui correspond à celle d'un charbon actif en poudre calibré, permet, à concentration égale en agent adsorbant, d'en augmenter la surface spécifique et d'augmenter en conséquence la capacité d'adsorption du procédé selon l'invention.

Selon encore une autre caractéristique préférentielle, ledit charbon actif en poudre présente une granulométrie inférieure 1 micromètre.

Une telle granulométrie, qui correspond à celle d'un charbon actif en poudre micronisée, permet, à concentration égale en agent adsorbant, d'en augmenter encore davantage la surface spécifique et d'augmenter en conséquence la capacité d'adsorption du procédé selon l'invention. Un tel charbon actif en poudre est généralement commercialisé directement sous la forme d'une émulsion et présente ainsi l'avantage d'être facile à utiliser sans nécessiter la mise en oeuvre d'un appareillage spécifique comme cela est le cas lorsque du charbon actif en poudre classique ou calibré est utilisé. En effet, l'utilisation de CAP de ce type suppose, préalablement à son injection, de le mélanger avec de l'eau de service, ce qui nécessite des moyens spécifiques coûteux, comme des cuves logeant des agitateurs.

Ladite étape d'acidification de la suspension d'agent adsorbant comprend préférentiellement une injection d'acide dans ladite suspension d'agent adsorbant en poudre neuf en milieu aqueux jusqu'à une valeur de pH comprise entre 2 et 5.

De préférence, de l'acide sera injecté dans la suspension jusqu'à obtenir un pH compris entre 3 et 4.

De façon préférée entre toutes, de l'acide sera injecté dans la suspension jusqu'à obtenir un pH égal à 3.

Selon un aspect préféré, un procédé selon l'invention comprend une étape de coagulation de ladite eau brute.

De façon avantageuse, les agents coagulants et les agents floculants sont injectés séparément de manière telle que l'effet de l'un n'inhibe pas l'effet de l'autre.

Dans ce cas, ladite étape de coagulation comprend avantageusement l'injection dans ladite eau brute d'au moins un agent coagulant en amont de ladite zone de pré-contact.

Selon une approche différente, ladite étape de coagulation comprend avantageusement l'injection dans ladite eau brute d'au moins un agent coagulant dans une zone de coagulation située entre ladite zone de pré-contact et ladite zone de floculation-lestée.

Des agents adsorbants autres que de CAP peuvent être utilisés, comme par exemple des résines adsorbantes, des argiles expansées ou de la poudre d'alumine activée.

### 6. Liste des figures

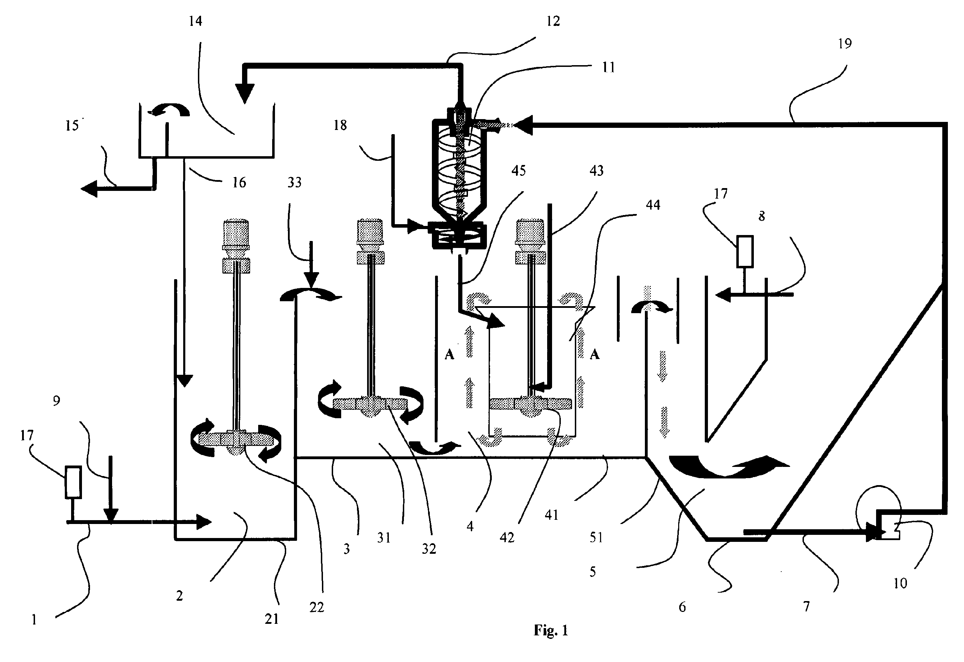

D'autres caractéristiques et avantages de l'invention apparaîtront plus clairement à la lecture de la description suivante d'un mode de réalisation préférentiel, donné à titre de simple exemple illustratif et non limitatif, et de l'unique figure 1 annexée qui illustre un mode de réalisation d'une installation destinée à la mise en oeuvre d'un procédé selon l'invention.

### 7. Description d'un mode de réalisation de l'invention

### 7.1. Rappel du principe de l'invention

Le principe général de l'invention repose sur la mise en oeuvre :
- d'une étape de recyclage d'un mélange de boues et de réactif adsorbant provenant de la surverse d'un hydrocyclone relié à la souverse d'une zone de décantation dans une zone de pré-contact dans laquelle une eau a traitée est mise en contact avec un tel réactif, et
- d'une étape de mesure d'une information représentative de la concentration en réactif adsorbant dans cette zone de pré-contact.

Ceci permet, dans une autre étape, d'injecter en amont de la zone de pré-contact du réactif adsorbant neuf en suspension en milieux aqueux, lorsque cela est nécessaire pour maintenir dans cette zone une concentration prédéterminée en réactif adsorbant afin de produire une eau de qualité convenable.

La mise en oeuvre d'une telle technique permet de maîtriser le traitement par adsorption de l'eau et donc de produire à un coût relativement réduit, à tout le moins comparativement aux techniques de l'art antérieur, une eau de qualité acceptable.

### 7.2. Exemple d'une installation pour la mise en oeuvre d'un procédé de traitement d'eau selon l'invention

On présente, en relation avec la figure 1, un mode de réalisation d'une installation destinée à la mise en oeuvre d'un procédé de traitement d'eau selon l'invention.

Ainsi que cela est représenté sur cette figure 1, une telle installation de traitement d'eau comprend une canalisation d'amenée d'eau brute à traiter 1 qui débouche dans une zone de pré-contact 2. Des moyens d'injection, comme par exemple un injecteur 9, permettent l'injection dans l'eau a traiter circulant dans la canalisation d'amenée 1 d'une suspension en milieu aqueux d'un réactif adsorbant en poudre.

La zone de pré-contact 2 est délimitée par les parois d'une cuve 21 et loge un agitateur 22. Elle communique, dans une partie haute, avec une zone de coagulation 3.

Cette zone de coagulation 3 est délimitée par les contours d'une cuve 31 qui loge un agitateur 32. Des moyens d'injections, comme par exemple un injecteur 33, permettent l'injection d'au moins un réactif coagulant dans la zone de coagulation 3. Cette zone de coagulation 3 communique dans une partie inférieure avec une zone de floculation lestée 4.

Cette zone de floculation lestée 4 est délimitée par les contours d'une cuve 41 qui loge un agitateur 42. Des moyens d'injection, comme par exemple un injecteur 43, permettent l'injection d'au moins un réactif floculant dans la zone de floculation lestée 4. Des moyens d'injections 45 permettent également d'introduire dans la cuve 41 du ballast constitué par un matériau granulaire insoluble plus dense que l'eau comme du sable. Cette zone de floculation lestée 4 loge également un élément guide flux qui comprend un élément essentiellement tubulaire. 44 à l'intérieur duquel est mis en rotation l'agitateur 42. La zone de floculation lestée 4 constitue de ce fait une zone de maturation. Elle communique dans une partie haute avec une zone de décantation 5.

La zone de décantation 5 est délimitée par une cuve 51 définissant essentiellement un « U ». Elle présente une sousverse 6 qui est reliée à une canalisation d'extraction 7 d'un mélange de boues, de ballast et de réactif adsorbant en poudre. Elle présente également une surverse 8 pour l'évacuation d'une eau traitée.

Une canalisation 19 et des moyens de soutirage, comme une pompe 10, permettent l'acheminement de ce mélange de boues, de ballast et de réactif adsorbant en poudre à l'entrée d'un hydrocyclone 11.

L'hydrocyclone 11 présente une sousverse qui permet l'acheminement d'un mélange de ballast et d'une faible quantité de boues vers les moyens d'injection 45. Cette sousverse est reliée à des moyens d'injection d'eau de service 18. Ceci permet l'injection d'un mélange de ballast et de boues diluées dans la zone de floculation lestée 4. Il présente également une surverse qui est reliée à une canalisation 12 qui permet le déversement d'un mélange de boues et de réactifs adsorbants en poudre dans une zone de transition 14.

Cette zone de transition 14 présente un trop plein 15 qui permet l'évacuation de boues vers une zone de traitement annexe. Elle présente également une canalisation d'évacuation 16 d'un mélange de boues et de réactifs adsorbants en poudre qui débouche dans la zone de pré-contact 2.

Une telle installation comprend des moyens de mesure d'une information représentative de la concentration en réactif adsorbant en poudre de l'eau contenue dans la zone de pré-contact 2. Ces moyens de mesure 17 comprennent dans ce mode de réalisation :
- des moyens de mesure de l'absorbance aux UV de l'eau brute à traiter circulant dans la canalisation 1 ;
- des moyens de mesure de l'absorbance aux UV de l'eau traitée circulant dans la surverse 8 ;
- des moyens de calcul permettant de déduire des mesures précédentes une information représentative de la concentration en réactif adsorbant de l'eau contenue dans la zone de pré-contact 2.

Ces moyens de mesure 17 sont reliés à des moyens de commande (non représentés) qui permettent de comparer la valeur représentative de la concentration en réactif adsorbant de l'eau contenue dans la zone de pré-contact 2 à une valeur de référence prédéterminée. Ces moyens de commande permettent en outre, lorsque la valeur de cette concentration se révèle être insuffisante, de piloter la mise en oeuvre des moyens d'injection 9 de manière à introduire en amont de la zone de pré-contact 2 une suspension dans de l'eau de service de réactif adsorbant en poudre neuf de manière telle que cette concentration soit constante.

### 7.3. Exemple d'un procédé de traitement d'eau selon l'invention

Un procédé de traitement d'eau selon l'invention va maintenant être décrit en relation avec l'installation représentée à la figure 1.

Un tel procédé consiste à acheminer de l'eau à traiter dans la zone de pré-contact 2 dans laquelle elle est mise en contact avec au moins un réactif adsorbant en poudre, comme par exemple du CAP (Charbon Actif en Poudre).

Après un temps de contact égal à 10 minutes, le mélange d'eau et de CAP est introduit dans la zone de coagulation 3 dans laquelle il est mis en contact avec au moins un réactif coagulant par la mise en oeuvre des moyens d'injection 33. Dans des variantes de ce mode de réalisation, ce temps de contact pourra être compris entre 5 et 15 minutes. Le réactif coagulant est constitué par un sel d'aluminium dont la concentration dans la zone de coagulation est égale à 1,5 mg/l. Dans une variante, le réactif coagulant pourra être constitué par un sel de fer. Que le réactif coagulant soit un sel de fer ou un sel d'aluminium, sa concentration dans la zone de coagulation sera préférentiellement comprise entre 0,5 et 3 mg/l. Dans une autre variante, le réactif coagulant pourra être constitué par un polymère, tel que du Polyadamc®, dont la concentration dans la zone de coagulation sera comprise entre 0,1 et 1 mg/l.

Après un temps de contact égal à 2 minutes, le mélange d'eau, de réactif adsorbant en poudre et de réactif coagulant transite dans la zone de floculation lestée 4. Dans des variantes, ce temps de contact pourra être compris entre 1 et 3 minutes.

Ce mélange y est mis en contact avec :
- au moins un réactif floculant par la mise en oeuvre des moyens d'injection 43, et
- du ballast par la mise en oeuvre des moyens d'injection 45.

La mise en oeuvre du guide flux 44 permet la création de phénomènes dynamiques qui engendre des mouvements d'eau représentés par les flèches A. La zone de floculation lestée constitue donc une zone de maturation.

Après un temps de maturation égal à 6 minutes, le mélange provenant de la zone de floculation lestée 4 transite dans la zone de décantation 5. Dans des variantes, ce temps de contact pourra être compris entre 3 et 8 minutes

Un mélange de boues, de ballast et de réactif adsorbant en poudre est extrait en sousverse 6 de la zone de décantation 5 au moyen de la canalisation 7. De l'eau traitée est recueillie en surverse 8 de cette zone de décantation.

Ce mélange de boues, de ballast et de réactif adsorbant en poudre est recirculé vers l'entrée de l'hydrocyclone 11 au moyen de la canalisation 19 et de la pompe 10.

Le ballast est séparé à l'intérieur de l'hydrocyclone 11 d'un mélange de boues et de réactif adsorbant en poudre. Il en est extrait en sousverse et déversé dans la zone de floculation lestée 4. Le mélange de boues et de réactif adsorbant en poudre est lui-même extrait en surverse de l'hydrocyclone 11.

Ce mélange est acheminé via la canalisation 12 dans la zone de transition 14. Une portion de ce mélange est recyclée dans la zone de pré-contact 2.

Les moyens de mesure 17 sont mis en oeuvre de façon continue afin de déterminer une information représentative de la concentration en réactif adsorbant en poudre dans l'eau contenue dans la zone de pré-contact 2.

Dans ce dessin, l'absorbance aux UV respectivement de l'eau brute circulant dans la canalisation 1 et de l'eau traitée évacuée en surverse 8 est mesurée de manière à déterminer, par comparaison de ces deux valeurs, une information représentative de la concentration en réactif adsorbant en poudre de l'eau contenue dans la cuve de pré-contact 2.

La valeur de cette concentration est ensuite comparée, par des moyens de commande, comme un ordinateur, à une valeur seuil prédéterminée de manière à vérifier si le niveau de cette concentration est suffisamment important.

Si le niveau de cette concentration se révèle être trop faible, les moyens d'injection 9 sont mis en oeuvre de manière à injecter dans l'eau à traiter en amont de la zone de pré-contact 2 une suspension en milieu aqueux de réactif adsorbant en poudre neuf dans une quantité telle que la concentration en réactif adsorbant en poudre de l'eau présente dans la zone de pré-contact 2 soit maintenue sensiblement constante au cours du traitement.

Il est prévu que cette concentration soit maintenue entre 0,5 et 5 g/l et avantageusement entre 1 et 3 g/l.Dans ce mode de réalisation, elle sera maintenue à 2,5 grammes de réactif adsorbant en poudre par litre d'eau contenue dans la zone de pré-contact 2.

Selon l'invention, il est essentiel d'acidifier la suspension de réactif adsorbant en poudre en milieu aqueux. Cette acidifaction peut par exemple consiste en l'injection d'un acide dans cette suspension, comme de l'acide sulfurique ou préférentiellement de l'acide citrique. L'acide sera injecté dans la suspension jusqu'à ce que la valeur de son pH devienne égale à 3. Dans d'autres variantes, l'acide sera injecté dans la suspension jusqu'à ce que la valeur de son pH soit comprise entre 2 et 5 et préférentiellement entre 3 et 4, une amélioration étant observée dès que le pH devient égal à 5. Cette acidification a pour effet de réduire la taille des particules d'agent adsorbant et, à concentration égale, d'augmenter la surface spécifique globale de contact de cet agent avec l'eau à traiter. Ceci conduit à améliorer les capacités d'adsorption d'un procédé selon l'invention.

Il est noté que, à chacun de ses recyclages, la capacité d'adsorption du CAP diminue. Toutefois, une hausse de la concentration du CAP dans la zone de pré-contact n'exerce qu'un faible impact positif sur la capacité d'adsorption d'un procédé selon l'invention. Au-delà d'un certain seuil, cela peut au contraire produire un impact négatif sur les traitements qui peuvent être placés en aval d'un tel procédé du fait de la teneur en CAP que peut présenter l'eau traitée en sortie du procédé. En particulier, une augmentation de la concentration en CAP au-delà de 5g/l d'eau dans la zone de pré-contact peut engendrer un risque de colmatage de membranes de filtration qui seraient placées en aval du procédé.

### 7.4. Variante

Dans une variante, la zone de coagulation 3 pourra ne pas être mise en oeuvre. Dans ce cas, l'eau à traiter sera coagulée préalablement à son injection dans la zone de pré-contact 2.

### 7.5. Avantages

La mise en oeuvre d'un procédé de traitement d'eau selon l'invention permet de contrôler l'apport dans l'eau en réactif adsorbant en poudre et donc de maîtriser le traitement de l'eau pas adsorption.

L'invention conduit à limiter la consommation en réactif adsorbant en poudre et le nombre d'opérations nécessaires au traitement de l'eau. En définitive, sa mise en oeuvre permet de produire une eau de qualité convenable à un coût plus réduit que les techniques de l'art antérieur ne permettent de le faire.

## Revendications

1. Procédé de traitement d'une eau brute chargée d'impuretés colloïdales, dissoutes ou en suspension au sein d'une installation de traitement, ledit procédé comprenant au moins les étapes suivantes :
- mettre en contact dans une zone agitée de pré-contact (2) ladite eau avec au moins un agent adsorbant en poudre ;
- introduire le premier mélange provenant de ladite zone de pré-contact (2) dans une zone agitée de floculation lestée (4) ;
- mettre en contact dans ladite zone agitée de floculation lestée (4) ledit premier mélange avec au moins un réactif floculant et avec au moins un ballast constitué d'au moins un matériau granulaire insoluble plus lourd que l'eau pour permettre la formation de flocs lestés ;
- introduire le second mélange provenant de ladite zone de floculation lestée (4) dans une zone de décantation (5) ;
- extraire un mélange de boues, de ballast et d'agent adsorbant en poudre en partie basse de ladite zone de décantation (5) ;
- extraire l'eau traitée séparée dudit mélange de boues, de ballast et d'agent adsorbant en poudre en partie haute de ladite zone de décantation (5) ;
- introduire ledit mélange de boues, de ballast et d'agent adsorbant en poudre dans un hydrocyclone (11) ;
- recycler les souverses dudit hydrocyclone (11) constituées essentiellement de ballast dans ladite zone de floculation lestée (4) ;
- acheminer les surverses dudit hydrocyclone (11) constituée par un mélange de boue et de réactif adsorbant en poudre dans une zone de transition (14) ;
**caractérisé en ce qu'**il comprend :
- une étape de recyclage dans ladite zone de pré-contact (2) d'au moins une partie du mélange de boues et d'agent adsorbant en poudre provenant de ladite zone de transition (14) ;
- une étape de mesure en continu d'au moins une information représentative de la concentration en agent adsorbant en poudre dans ladite zone de pré-contact (2) ;
- une étape d'injection en amont de ladite zone de pré-contact (2) d'une suspension d'agent adsorbant en poudre neuf en milieu aqueux lorsque ladite concentration en agent adsorbant en poudre dans ladite zone de pré-contact (2) est inférieure à une valeur seuil prédéterminée,
et **en ce qu'**il comprend une étape d'acidification de ladite suspension d'agent adsorbant.

2. Procédé de traitement selon la revendication 1, **caractérisé en ce que** ladite étape de mesure en continu d'au moins une information représentative de la concentration en agent adsorbant en poudre dans ladite zone de pré-contact (2) comprend les sous-étapes consistant à :
- mesurer l'absorbance aux UV de ladite eau brute ;
- mesurer l'absorbance aux UV de ladite eau traitée ;
- déduire des mesures de l'absorbance la concentration en agent adsorbant en poudre.

3. Procédé de traitement d'eau selon l'une quelconque des revendications 1 ou 2, **caractérisé en ce que** ledit agent adsorbant en poudre est constitué par du charbon actif en poudre.

4. Procédé selon la revendication 3, **caractérisé en ce que** la valeur de concentration seuil dudit charbon actif en poudre dans ladite zone de pré-contact (2) est comprise entre 0,5 et 10 g/l.

5. Procédé de traitement selon la revendication 4, **caractérisé en ce que** ladite valeur de concentration seuil dudit charbon actif en poudre dans ladite zone de pré-contact (2) est comprise entre 1 et 3 g/l.

6. Procédé de traitement selon l'une quelconque des revendications 1 à 5, **caractérisé en ce que** ledit charbon actif en poudre présente une granulométrie comprise entre 8 et 60 micromètres.

7. Procédé de traitement selon la revendication 6, **caractérisé en ce que** ledit charbon actif en poudre présente une granulométrie comprise entre 15 et 35 micromètres.

8. Procédé de traitement selon la revendication 6, **caractérisé en ce que** ledit charbon actif en poudre présente une granulométrie comprise entre 8 et 15 micromètres.

9. Procédé de traitement selon l'une quelconque des revendications 1 à 5, **caractérisé en ce que** ledit charbon actif en poudre présente une granulométrie inférieure à 1 micromètres.

10. Procédé selon l'une quelconque des revendications 1 à 9, **caractérisé en ce que** ladite étape d'acidification comprend une injection d'acide dans ladite suspension d'agent adsorbant en poudre neuf en milieu aqueux jusqu'à ce que la valeur de son pH soit comprise entre 2 et 5.

11. Procédé selon la revendication 10, **caractérisé en ce que** ladite étape d'acidification comprend une injection d'acide dans ladite suspension d'agent adsorbant en poudre neuf en milieu aqueux jusqu'à ce que la valeur de son pH soit égale à 3.

12. Procédé de traitement selon l'une quelconque des revendications 1 à 11, **caractérisé en ce qu'**il comprend une étape de coagulation de ladite eau brute.

13. Procédé de traitement selon la revendication 12, **caractérisé en ce que** ladite étape de coagulation comprend l'injection dans ladite eau brute d'au moins un agent coagulant en amont de ladite zone de pré-contact (2).

14. Procédé de traitement selon la revendication 12, **caractérisé en ce que** ladite étape de coagulation comprend l'injection dans ladite eau brute d'au moins un agent coagulant dans une zone de coagulation (3) située entre ladite zone de pré-contact (2) et ladite zone de floculation-lestée (4).

## Patentansprüche

1. Verfahren zur Behandlung von Rohwasser, das mit kolloidalen, gelösten oder suspendierten Verunreinigungen belastet ist, in einer Aufbereitungsanlage, wobei das Verfahren mindestens die folgenden Stufen umfasst:
- In Kontakt bringen des Rohwassers mit mindestens einem pulverförmigen Adsorptionsmittel in einer gerührten Vorkontaktzone (2) ;
- Einleiten der aus der Vorkontaktzone (2) kommenden ersten Mischung in eine gerührte Zone (4) beschwerter Ausflockung;
- In Kontakt bringen der ersten Mischung in der gerührten Zone beschwerter Ausflockung (4) mit mindestens einem Flockungsreagens und mit mindestens einem Ballast, der aus mindestens einem körnigen, unlöslichen und schwereren Material als Wasser besteht, um die Bildung von beschwerten Flocken zu ermöglichen;
- Einleiten der aus der Zone der beschwerten Ausflockung (4) kommenden zweiten Mischung in eine Dekantierzone (5);
- Abtrennen eines Gemischs von Schlamm, Ballast und pulverförmigem Adsorptionsmittel im unteren Teil der Dekantierzone (5);
- Abtrennen des behandelten Wassers, welches von dem Gemisch aus Schlamm, Ballast und pulverförmigem Adsorptionsmittel abgetrennt wurde, im oberen Teil der Dekantierzone (5);
- Einleiten des Gemischs aus Schlamm, Ballast und pulverförmigem Adsorptionsmittel in einen Hydrozyklon (11);
- Recyceln der unteren Abscheidungen aus dem Hydrozyklon (11), die im wesentlichen aus Ballast bestehen, in die Zone der beschwerten Ausflockung (4);
- Leiten des Überlaufs aus dem Hydrozyklons (11), der aus einem Gemisch von Schlamm und pulverförmigem, adsorbierenden Reagens besteht, in eine Übergangszone (14);
**dadurch gekennzeichnet, dass** es aufweist:
- eine Stufe des Recycelns in die Vorkontaktzone (2) von mindestens einem Teil des von der Übergangszone (14) kommenden Gemisches von Schlamm und pulverförmigem Adsorptionsmittel;
- eine Stufe der kontinuierlichen Messung von mindestens einer für die Konzentration von pulverförmigem Adsorptionsmittel in der Vorkontaktzone (2) repräsentativen Information;
- eine Stufe der Injektion einer Suspension von neuem pulverförmigem Adsorptionsmittel in wässrigem Milieu stromaufwärts von der Vorkontaktzone (2) , wenn die Konzentration an pulverförmigem Adsorptionsmittel in der Vorkontaktzone (2) unter einem vorbestimmten Schwellenwert liegt,
und dass das Verfahren eine Stufe der Ansäuerung der Suspension des Adsorptionsmittels aufweist.

2. Verfahren zur Rohwasserbehandlung nach Anspruch 1, **dadurch gekennzeichnet, dass** die Stufe der kontinuierlichen Messung mindestens einer Information, die für die Konzentration von pulverförmigem Adsorptionsmittel in der Vorkontaktzone (2) repräsentativ ist, die folgenden Unterstufen aufweist:
- Messung der UV-Absorption des Rohwassers;
- Messung der UV-Absorption des behandelten Wassers;
- Bestimmung der Konzentration an pulverförmigem Adsorptionsmittel aus den Messungen der Absorption.

3. Verfahren zur Rohwasserbehandlung nach einem der Ansprüche 1 oder 2, **dadurch gekennzeichnet, dass** das pulverförmige Adsorptionsmittel aus pulverförmiger Aktivkohle besteht.

4. Verfahren nach Anspruch 3, **dadurch gekennzeichnet, dass** die Konzentrationsschwelle der pulverförmigen Aktivkohle in der Vorkontaktzone (2) zwischen 0,5 und 10 g/l liegt.

5. Verfahren zur Rohwasserbehandlung nach Anspruch 4, **dadurch gekennzeichnet, dass** der Wert der Konzentrationsschwelle der pulverförmigen Aktivkohle in der Vorkontaktzone (2) zwischen 1 und 3 g/l liegt.

6. Verfahren zur Rohwasserbehandlung nach einem der Ansprüche 1 bis 5, **dadurch gekennzeichnet, dass** die pulverförmige Aktivkohle eine Korngröße zwischen 8 und 60 Mikrometern aufweist.

7. Verfahren zur Rohwasserbehandlung nach Anspruch 6, **dadurch gekennzeichnet, dass** die pulverförmige Aktivkohle eine Korngröße zwischen 15 und 35 Mikrometern aufweist.

8. Verfahren zur Rohwasserbehandlung nach Anspruch 6, **dadurch gekennzeichnet, dass** die pulverförmige Aktivkohle eine Korngröße zwischen 8 und 15 Mikrometern aufweist.

9. Verfahren zur Rohwasserbehandlung nach einem der Ansprüche 1 bis 5, **dadurch gekennzeichnet, dass** die pulverförmige Aktivkohle eine Korngröße unter 1 Mikrometer aufweist.

10. Verfahren nach einem der Ansprüche 1 bis 9, **dadurch gekennzeichnet, dass** die Stufe der Ansäuerung ein Einleiten von Säure in die Suspension von neuem pulverförmigem Adsorptionsmittel in wässrigem Milieu bis deren pH-Wert zwischen 2 und 5 liegt, umfasst.

11. Verfahren nach Anspruch 10, **dadurch gekennzeichnet, dass** die Ansäuerungsstufe ein Einleiten von Säure in die Suspension von neuem pulverförmigem Adsorptionsmittel in wässrigem Milieu umfasst, bis deren pH-Wert gleich 3 ist.

12. Verfahren zur Rohwasserbehandlung nach einem der Ansprüche 1 bis 11, **dadurch gekennzeichnet, dass** es eine Stufe der Koagulation des Rohwassers umfasst.

13. Verfahren zur Rohwasserbehandlung nach Anspruch 12, **dadurch gekennzeichnet, dass** die Koagulationsstufe das Einleiten von mindestens einem Koagulationsmittel in das Rohwasser stromaufwärts von der Vorkontaktzone (2) umfasst.

14. Verfahren zur Rohwasserbehandlung nach Anspruch 12, **dadurch gekennzeichnet, dass** die Koagulationsstufe das Einleiten mindestens eines Koagulationsmittels in das Rohwasser in einer Koagulationsstufe (3) umfasst, die zwischen der Vorkontaktzone (2) und der Zone der beschwerten Ausflockung (4) liegt.

## Claims

1. A method for treating raw water loaded with dissolved or suspended colloidal impurities in a treatment plant, said method comprising at least the following step s:
- bringing said water into contact with at least one powdered adsorbent in an agitated pre-contact zone (2);
- introducing the first mixture originating from said pre-contact zone (2) into an agitated ballasted flocculation zone (4);
- bringing the first mixture into contact with at least one flocculant reagent and with at least one ballast comprising at least one insoluble granular material which is heavier than water to permit the formation of ballasted flocs in said agitated ballasted flocculation zone (4);
- introducing the second mixture originating from said ballasted flocculation zone (4) into a decantation zone (5);
- extracting a mixture of sludge, ballast and powdered adsorbent at the lower part of said decantation zone (5);
- extracting the treated water which is separated from said mixture of sludge, ballast and powdered adsorbent at the upper part of said decantation zone (5);
- introducing said mixture of sludge, ballast and powdered adsorbent into a hydrocyclone (11);
- recycling the underflow from said hydrocyclone (11) substantially comprising ballast into said ballasted flocculation zone (4);
- directing the overflow from said hydrocyclone (11) comprising a mixture of sludge and powdered adsorbent reagent into a transition zone (14);
**characterised in that** it comprises:
- a step of recycling at least part of the mixture of sludge and powdered adsorbent originating from said transition zone (14) into said pre-contact zone (2);
- a step of continuously measuring at least one piece of information which is representative of the concentration of powdered adsorbent in said pre-contact zone (2);
- a step of injecting a suspension of new powdered adsorbent in an aqueous medium upstream of said pre-contact zone (2) when said concentration of powdered adsorbent in said pre-contact zone (2) is less than a predetermined threshold value,
and **in that** it comprises a step of acidifying said suspension of adsorbent.

2. The treatment method according to claim 1, **characterised in that** said step of continuously measuring at least one piece of information which is representative of the concentration of powdered adsorbent in said pre-contact zone (2) comprises the sub-steps consisting of:
- measuring the UV absorbance of said raw water;
- measuring the UV absorbance of said treated water;
- deducing the concentration of powdered adsorbent from the absorbance measurements.

3. The water treatment method according to any one of claims 1 or 2, **characterised in that** said powdered adsorbent comprises powdered activated charcoal.

4. The method according to claim 3, **characterised in that** the threshold concentration value of said powdered activated charcoal in said pre-contact zone (2) is comprised between 0.5 and 10 g/l.

5. The treatment method according to claim 4, **characterised in that** said threshold concentration value of said powdered activated charcoal in said pre-contact zone (2) is comprised between 1 and 3 g/l.

6. The treatment method according to any one of claims 1 to 5, **characterised in that** said powdered activated charcoal has a particle size comprised between 8 and 60 micrometres.

7. The treatment method according to claim 6, **characterised in that** said powdered activated charcoal has a particle size comprised between 15 and 35 micrometres.

8. The treatment method according to claim 6, **characterised in that** said powdered activated charcoal has a particle size comprised between 8 and 15 micrometres.

9. The treatment method according to any one of claims 1 to 5, **characterised in that** said powdered activated charcoal has a particle size of less than 1 micrometre.

10. The method according to any one of claims 1 to 9, **characterised in that** said acidification step comprises an injection of acid into said suspension of new powdered adsorbent in an aqueous medium until its pH value is comprised between 2 and 5.

11. The method according to claim 10, **characterised in that** said acidification step comprises an injection of acid into said suspension of new powdered adsorbent in an aqueous medium until its pH value is equal to 3.

12. The treatment method according to any one of claims 1 to 11, **characterised in that** it comprises a step of coagulating said raw water.

13. The treatment method according to claim 12, **characterised in that** said coagulation step comprises the injection into said raw water of at least one coagulant upstream of said pre-contact zone (2).

14. The treatment method according to claim 12, **characterised in that** said coagulation step comprises the injection into said raw water of at least one coagulant in a coagulation zone (3) located between said pre-contact zone (2) and said ballasted flocculation zone (4).
